# EUROPÄISCHE PATENTSCHRIFT

(11) **EP 1 764 283 B1**
(45) Veröffentlichungstag und Bekanntmachung des Hinweises auf die Patenterteilung: **03.12.2008**
(21) Anmeldenummer: 06019235.8
(22) Anmeldetag: 14.09.2006
(51) Int. Cl.: B62D 1/06

(54) **Lenkradkranz für ein Kraftfahrzeug**
Steering wheel rim for a motor vehicle
Couronne de volant de direction de véhicule automobile

(30) Priorität: 16.09.2005 DE 102005044287
(43) Veröffentlichungstag der Anmeldung: 21.03.2007
(73) Patentinhaber: GM Global Technology Operations, Inc., Detroit, MI 48265-3000 (US)
(72) Erfinder: Diehl, Peter G., 65421 Groß-Gerau (DE); Kanning, Torsten, 65346 Eltville/Erbach (DE); Poppe, Stefan, Dr., 55130 Mainz (DE); Serries, Dirk, Dr., 65197 Wiesbaden (DE)
(74) Vertreter: Daniel, Ulrich W.P.

(56) Entgegenhaltungen:
- DE-A1- 19 746 318
- DE-C- 179 034
- JP-A- 1 178 078
- JP-A- 58 183 349

## Beschreibung

Die Erfindung betrifft einen Lenkradkranz für ein Kraftfahrzeug nach Anspruch 1.

Lenkräder für Kraftfahrzeuge werden nicht mehr nur unter - oftmals gegenläufigen - Sicherheits- und Designaspekten betrachtet, sondern werden zunehmend auch in Komfortbetrachtungen einbezogen. Aus dem Stand der Technik sind bereits Lenkräder bekannt, bei denen durch vertikales Schwenken und axiales Ziehen bzw Stauchen der Lenkradsäule eine Anpassung an den Fahrer erreicht werden kann. Bekannt ist auch, Ummantelungen des Lenkradkranzes mit verschiedenen Materialien (Leder, Kunststoffe uÄ) zum Verbessern der Griffigkeit und zum Anpassen des Durchmessers vorzunehmen. Weiterhin sind aus dem Stand der Technik Lenkräder bekannt, deren Lenkraddurchmesser unterschiedlich einstellbar sind.

Die beiden letztgenannten Möglichkeiten erfordern jedoch regelmäßig Umbaumaßnahmen am Fahrzeug und sind nicht einfach vor Fahrtantritt vom Fahrer einstellbar. Eine solche Justierbarkeit des Lenkradkranzdurchmessers sozusagen 'auf Knopfdruck' ist nicht bekannt.

Zwar zeigt die deutsche Offenlegungsschrift DE 199 19 278 ein Lenkrad für ein Kraftfahrzeug, bei dem zur Vermittlung eines dynamischen Fahrerlebnisses der Lenkradkranz zumindest teilweise in seiner Dicke und/oder in seinem Durchmesser veränderbar ist. Dazu sind radial verstellbare erste Kranzteile und zweite Kranzteile vorgesehen, die an den ersten Kranzteilen in Umfangsrichtung verschiebbar gelagert sind. Aber auch eine solche Mechanik lässt kein bequemes Anpassen des Kranzdurchmessers im obengenannten Sinne zu, das von einem Nutzer akzeptiert wird.

Aus der JP 01-178978A ist ferner ein Lenkrad für ein Kraftfahrzeug bekannt, welches ein zweischaliges, aus einer oberen und einer unteren Schale bestehendes Kernelement aus einem harten synthetischen Gießharz aufweist. In Umfangsrichtung sind sich radial nach außen erstreckende und umlaufende, in Umfangsrichtung äquidistant angeordnete Vorsprünge vorgesehen. Das Kernelement weist einen Hohlraum auf und zwischen den außenliegenden Vorsprüngen sind Zwischenräume zur Aufnahme einzelner Schläuche vorgesehen. Diese Schläuche sind über Leitungen mit dem hohlen Innenraum des Kernelementes gekoppelt, so dass ein Fluid über diese Leitungen zur Veränderung des Griffdurchmessers in die Schläuche eingeleitet oder aus diesen abgeführt werden kann.

Nachteilig hierbei ist der relativ komplexe innere Aufbau und das Erfordernis, eine große Anzahl über den gesamten Außenradius des Lenkrades anzuordnender Schläuche vorzusehen. Da die einzelnen Schläuche in Umfangsrichtung um den Lenkradkranz verteilt angeordnet sind, erfordert dies, dass die einzelnen Schläuche entsprechend ihrer vorgesehenen Position am Lenkradkranz einen entsprechenden Durchmesser bzw. einen daran angepassten Umfang aufweisen müssen.

Zudem gelangen die flexiblen Schläuche unmittelbar mit einer das Lenkrad umschließenden Außenhaut zur Anlage. Je nach Expansionsgrad der einzelnen Schläuche, insbesondere bei nur teilweise gefüllten Schläuchen fühlt sich der Lenkradkranz für den Fahrer unangenehm weich an.

Es ist Aufgabe der vorliegenden Erfindung, den eingangs genannten Lenkradkranz derart weiterzubilden, dass dieser bequem verstellbar, dabei gleichzeitig stabil und sicher, einfach und kostengünstig herstellbar ist und zudem für den Benutzer angenehme, annähernde gleichbleibende, haptische Eigenschaften aufweist.

Diese Aufgabe wird durch einen Lenkradkranz gelöst, der wenigstens einen um seinen festen, tragenden Innenring gelegten Fluidsack aufweist, dessen Volumen veränderbar ist, der von einem elastischen Außenmantel umschlossen wird und wobei zwischen dem Innenring und dem Außenmantel ein federnder, offener Ring geführt ist.

Ein wesentlicher Punkt der Erfindung liegt dabei darin, dass allein das Volumen des Fluidsacks eine Stellgröße für den Lenkkranzdurchmesser bildet, was eine deutliche Vereinfachung gegenüber dem Stand der Technik darstellt. Dort waren bislang - oftmals gleichzeitig mehrere unterschiedliche - mechanische Verstellmechaniken vorgesehen, aus deren Zusammenspiel sich eine gewünschte Einstellung des Lenkradkranzes ergab, und die dementsprechend erst mühevoll zu bedienen waren. Die vorliegende Lösung ist dagegen erheblich einfacher aufgebaut sowie kostengünstig und schafft zudem die Basis für eine weitgehende Automatisierung der Einstellung.
Die Stabilität des Lenkradkranzes kann zudem durch den zwischen dem Innenring und dem Außenmantel geführten federnden offenen Ring erhöht werden. Dieser passt sich der jeweiligen Volumenfüllung des Fluidsacks an und stabilisiert diesen an seinem Umfang. Gleichzeitig wird eine einheitliche und glatte Grifffläche erzeugt, die dem Nutzer ein haptisch erlebbares festes Erscheinungsbild des Lenkradkranzes vermittelt, das insbesondere bei mehreren am Umfang des Innenrings gelagerten Fluidsäcken wichtig ist.

Ein weiterer wesentlicher Punkt besteht darin, dass der erfindungsgemäße Lenkradkranz besonders exakt auf den Nutzer anpassbar ist, und zwar sowohl hinsichtlich seines Durchmessers als auch seines Querschnitts, wodurch zudem die Handgröße des Nutzers berücksichtigt wird. Dadurch entsteht zum einen ein erheblich erhöhter Komfort, zum anderen aber auch eine deutlich erhöhte Sicherheit durch verbesserte Griffigkeit des Lenkradkranzes.

Bevorzugte Weiterbildungen des Lenkradkranzes sind in den folgenden Unteransprüchen 2 bis 10 angegeben.

Danach ist in einer bevorzugten Ausführungsform des Lenkradkranzes vorgesehen, dass dieser am Außenumfang des Innenrings eine Nut zum Führen eines jeweiligen Fluidsacks aufweist. Dadurch wird die stabile Führung des Sacks am Innenring unterstützt, die auch eine sichere Lagerung bei unterschiedlichsten Volumengrößen - und damit Durchmessern des Kranzes - gewährleistet.

Eine solche Führung des Fluidsacks ist dann besonders wirkungsvoll, wenn die Nut einen in Umfangsrichtung gesehen bogenförmigen Querschnitt aufweist. Dieser kann zB einem (Teil)Querschnitt des Sacks in seiner mittleren Ausdehnung entsprechen, womit dieser auch mit jeder geringeren oder größeren Volumenfüllung sicher am Innenring gehalten wird, ohne dass der Innenring einen zu großen oder kleinen Querschnitt annehmen muss.

Auch der offene Ring kann einen in Umfangsrichtung gesehen bogenförmigen Querschnitt aufweisen, um eine stabile Lagerung an dem einen oder den mehreren, Fluidsäcken zu gewährleisten. Sinngemäß gilt hier das Gleiche wie für den Querschnitt der Nut, die am Innenring ausgebildet sein kann.

Eine besonders komfortable Anpassung des Lenkradkranzes ergibt sich, wenn der oder die Fluidsäcke über Zuleitungen mit einem Kompressor zum Befüllen mit einem Fluid verbunden sind. Durch Betätigung des Kompressors zB über einen Schalter an der Armaturentafel oder am Lenkrad selbst ist damit das Volumen in den Säcken äußerst einfach veränderbar, wodurch ein derart anpassbarer Lenkradkranz große Akzeptanz findet.

Zwar können die Zuleitungen zu dem einen oder den mehreren Fluidsäcken einstückig oder rohrförmig mit dem Lenkradkranz ausgebildet sein. Eine einfache und kostengünstige Alternative dazu sieht jedoch vor, dass die Zuleitungen Schläuche sind. Diese lassen sich zB im Querschnitt des Kranzes führen und mit einem (am Lenkrad selbst) integrierten Kompressor verbinden, oder über eine Nabe des Lenkrads mit einem weiter entfernt angeordneten Kompressor verbinden.

Eine wiederholt gute Anpassbarkeit des Lenkradkranzes für unterschiedliche Nutzer wird erreicht, indem der Kompressor mit einem Schalter verbunden ist, über den eine definierte Menge des Fluids eingeleitet werden kann. Im einfachsten Fall kann dies zB ein skalierter Drehschalter, in einer etwas komfortableren Ausführung zB ein Wippschalter mit digitaler Anzeige sein, der in jedem Fall eine wiederholt exakte Einstellung des Kranzes auf den jeweiligen Fahrer zulässt, der sich seine Durchmessereinstellung gemerkt hat.

In einer deutlich komfortableren Ausprägung ist vorgesehen, dass der eingestellte Durchmesser des Lenkradkranzes für verschiedenen Fahrer in einem Speicher hinterlegt und wieder abgerufen werden kann. Ein derart personalisierter Durchmesser kann für den entsprechenden Nutzer automatisch eingestellt werden, wenn dieser sich zB durch Eingabe eines Codes am Fahrzeug zu erkennen gibt.

Dies kann in besonders einfacher Weise dadurch geschehen, dass sich der Speicher über einen Funkschlüssel ansprechen lässt, der keine weitere Tätigkeit des Nutzers mehr erfordert. Die Bedienung des Lenkradkranzes wird damit noch bequemer.

Grundsätzlich kann das Fluid in dem einen oder den mehreren Fluidsäcken aus einer Flüssigkeit bestehen. Aus Sicherheitsgründen ist es aber von Vorteil, wenn das Fluid Luft ist. Dadurch wird der Lenkradkranz zumindest in Teilen komprimierbar und ist für den Fall eines Aufpralls weicher gestaltet.

Die Erfindung wird im Folgenden anhand eines Ausführungsbeispiels unter Bezugnahme auf die zugehörigen Zeichnungen näher erläutert. Gleiche oder gleichwirkende Teile sind mit gleichen Bezugsziffern versehen. Es zeigen:

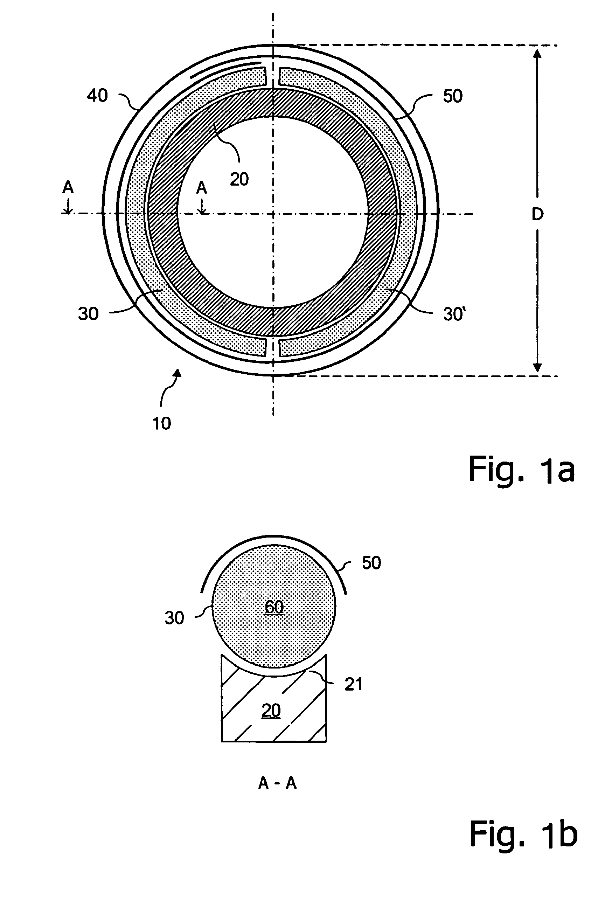

- Figur 1a: eine geschnittene Draufsicht auf einen erfindungsgemäßen Lenkradkranz für ein Kraftfahrzeug, und
- Figur 1b: einen Querschnitt des Lenkradkranzes im Schnitt A - A der Figur 1a.

Figur 1a zeigt eine geschnittene Draufsicht auf einen erfindungsgemäßen Lenkradkranz 10 für ein Kraftfahrzeug, mit einem festen, tragenden Innenring 20, über dessen Umfang hinweg zwei Fluidsäcke 30, 30' gelegt sind. Je nach Füllvolumen der Säcke weiten diese sich in radiale und in axiale Richtung aus, womit ein Durchmesser D und ein (Griff)Querschnitt des Kranzes an den spezifischen Nutzerwunsch angepasst werden kann. Ein federnder, offener Ring 50 und eine elastische Ummantelung 40 dehnen sich ebenfalls aus, wobei der federnde Ring 50 zum einen eine Gegenkraft aufbaut und dadurch für einen festen Halt auf den Fluidsäcken 30, 30' sorgt, und zum anderen eine stabile Haptik des Lenkrads sicherstellt. Die Säcke 30, 30' können über Schläuche mit einem Kompressor verbunden sein, der über einen Schalter im Fahrzeug eine definierbare Menge Luft 60 (in Figur 1b bezeichnet) in die Schläuche pumpt und diese dadurch ausdehnt (nicht dargestellt).

Figur 1b zeigt einen Querschnitt des Lenkradkranzes 10 im Schnitt A - A der Figur 1a. Die in Figur 1a gezeigte elastische Ummantelung 40 wurde in dieser Ansicht der Übersicht halber weggelassen. Erkennbar ist die Führung des Fluidsacks 30 zwischen Innenring 20 und federndem Ring 50, der bei jedem Füllvolumen stabil im bogenförmigen Querschnitt des Rings 50 und einer bogenförmige Nut 21 im Ring 20 gehalten ist. Deren Bogenform ist so gewählt, dass beide Fluidsäcke 30, 30' bei selbst noch stärkerer Aufweitung durch ein Fluid 60 sicher am Innenring 20 gehalten werden. Das Fluid 60 ist in diesem Ausführungsbeispiel Luft, um den Lenkradkranz 10 an seinem Umfang für eine Aufprall komprimierbar zu gestalten.

Insgesamt lässt der erfindungsgemäße Lenkradkranz eine optimale Anpassung an die Nutzerwünsche zu. Die einfache Verstellmöglichkeit des Kranzdurchmessers über ein Fluid eröffnet elektrische Bedienmöglichkeiten über einen Kompressor, bei denen zudem personalisierte Einstellungen speicher- und abrufbar sind. Der einfache konstruktive Aufbau macht weiterhin eine kostengünstige Realisierung möglich.

### Bezugszeichenliste

- 10: Lenkradkranz
- 20: Fester, tragender Innenring des Lenkradkranzes 10
- 21: Nut des Innerrings
- 30, 30': Volumenveränderlicher Fluidsack
- 40: Elastischer Außenmantel
- 50: Federnder, offener Ring
- 60: Fluid
- D: Durchmesser des Lenkradkranzes 10

## Patentansprüche

1. Lenkradkranz (10) für ein Kraftfahrzeug, umfassend einen festen, tragenden Innenring (20) und mit wenigstens einem um diesen Innenring (20) gelegten Fluidsack (30, 30'), dessen Volumen veränderbar ist und der von einem elastischen Außenmantel (40) umschlossen wird, **dadurch gekennzeichnet, dass** zwischen dem Innenring (20) und dem Außenmantel (40) ein federnder, offener Ring (50) geführt ist.

2. Lenkradkranz (10) nach Anspruch 1, bei dem am Außenumfang des Innenrings (20) eine Nut (21) zum Führen eines jeweiligen Fluidsacks (30, 30') vorgesehen ist.

3. Lenkradkranz (10) nach Anspruch 2, bei dem die Nut (21) einen in Umfangsrichtung gesehen bogenförmigen Querschnitt aufweist.

4. Lenkradkranz (10) nach einem der vorstehenden Ansprüche, bei dem der offene Ring (50) einen in Umfangsrichtung gesehen bogenförmigen Querschnitt aufweist.

5. Lenkradkranz (10) nach einem der vorstehenden Ansprüche, bei dem der oder die Fluidsäcke (30, 30') über Zuleitungen mit einem Kompressor zum Befüllen mit einem Fluid (60) verbunden sind.

6. Lenkradkranz (10) nach Anspruch 5, bei dem die Zuleitungen Schläuche sind.

7. Lenkradkranz (10) nach Anspruch 5 oder 6, bei dem der Kompressor mit einem Schalter verbunden ist, über den eine definierte Menge des Fluids (60) eingeleitet werden kann.

8. Lenkradkranz (10) nach einem der Ansprüche 5 bis 7, bei dem der eingestellte Durchmesser (D) des Lenkradkranzes (10) für verschiedenen Fahrer in einem Speicher hinterlegt und wieder abgerufen werden kann.

9. Lenkradkranz (10) nach Anspruch 8, bei dem sich der Speicher über einen Funkschlüssel ansprechen lässt.

10. Lenkradkranz (10) nach einem der vorstehenden Ansprüche, bei dem das Fluid (60) Luft ist.

## Claims

1. Steering wheel rim (10) for a motor vehicle, comprising a resistant, supporting internal ring (20) and with at least one fluid bag (30, 30') put around this internal ring (20) whose volume is changeable and which is embraced by an elastic external casing (40), **characterized in that** between the internal ring (20) and the external casing (40) there is a resilient open ring (20).

2. Steering wheel rim (10) according to claim 1 in which on the external perimeter of the internal ring (20) there is a slot (21) to pass the respective fluid bag (30, 30').

3. Steering wheel rim (10) according to claim 2 in which the slot (21) is equipped with a cross section having the shape of an arc if viewed towards the direction of the perimeter.

4. Steering wheel rim (10) according to one of the previous claims, in which the open ring (50) is equipped with a cross section having the shape of an arc if viewed towards the direction of the perimeter.

5. Steering wheel rim (10) according to one of the previous claims in which the fluid bag or the fluid bags (30, 30') are connected with a compressor to be filled with a fluid (60) by inlet pipes.

6. Steering wheel rim (10) according to claim 5, in which the inlet pipes are flexible tubes.

7. Steering wheel rim (10) according to claim 5 or 6, in which the compressor is connected with a switch, through which a determined volume of the fluid 60) can be introduced.

8. Steering wheel rim (10) according to one of the previous claims 5 to 7, in which the adjusted diameter (D) of the steering wheel rim (10) can be stored in a accumulator for different drivers and recalled again.

9. Steering wheel rim (10) according to claim 8, in which the accumulator can be activated by a remote control key.

10. Steering wheel rim (10) according to one of the previous claims, in which the fluid (60) is air.

## Revendications

1. Couronne de volant de direction (10) de véhicule automobile, comprenant une bague interne fixe, porteuse (20) et avec au moins une poche pour fluide (30, 30) placée autour de cette bague interne, dont le volume est modifiable et qui est entourée d'une enveloppe extérieure élastique (40), **caractérisé en ce que** une bague flexible et ouverte est dirigée (50) entre la bague interne (20) et l'enveloppe extérieure (40).

2. Couronne de volant de direction (10) selon revendication 1, dans le cas d'une goujure (21) prévue sur la circonférence extérieure de la bague interne (20) pour y placer une poche de fluide (30, 30).

3. Couronne de volant de direction (10) selon revendication 2, dans le cas où la goujure (21) présente une section transversale en forme de coude vu dans une direction circonférentielle.

4. Couronne de volant de direction (10) selon une des revendications précédentes, dans le cas où la bague ouverte (50) présente une section transversale en forme de coude vu dans une direction circonférentielle.

5. Couronne de volant de direction (10) selon une des revendications précédentes, dans le cas où la ou les poche(s) de fluide (30, 30) sont reliées par des conduites à un compresseur pour le remplissage du fluide (60).

6. Couronne de volant de direction (10) selon revendication 5, dans le cas où les câbles sont des tuyaux.

7. Couronne de volant de direction (10) selon revendication 5 ou 6, dans le cas où le compresseur est relié à un commutateur par lequel une quantité définie de fluide est introduite.

8. Couronne de volant de direction (10) selon revendications 5 à 7, dans le cas où la jauge (D) de la jante de commande de direction (10) peut être stockée pour différents conducteurs dans un accumulateur puis peut devenir à nouveau accessible.

9. Couronne de volant de direction (10) selon revendication 8, dans le cas où l'on peut démarrer l'accumulateur par une clé radioguidée.

10. Couronne de volant de direction (10) selon une des revendications précédentes, dans le cas où le fluide (60) est de l'air.
